# FASCICULE DE BREVET EUROPEEN

(11) **EP 1 597 104 B1**
(45) Date de publication et mention de la délivrance du brevet: **11.11.2009**
(21) Numéro de dépôt: 04713931.6
(22) Date de dépôt: 24.02.2004
(51) Int. Cl.: B60J 7/19, B60J 7/185

(54) **VERROUILLAGE DE TOIT ESCAMOTABLE DE VEHICULE**
VERRIEGELUNG EINES VERSENKBAREN FAHRZEUGDACHS
LOCK SYSTEM FOR A CONVERTIBLE VEHICLE ROOF

(30) Priorité: 28.02.2003 FR 0302487
(43) Date de publication de la demande: 23.11.2005
(73) Titulaire: SEBA, 75011 Paris (FR)
(72) Inventeur: QUEVEAU, Gérard, F-79140 Le Pin (FR); GUILLEZ, Jean-Marc, F-79140 Cirières (FR); QUEVEAU, Paul, F-79140 Montravers (FR)
(74) Mandataire: Novagraaf IP
(86) Numéro de dépôt international: PCT/FR2004/000414
(87) Numéro de publication internationale: WO 2004/078521

(56) Documents cités:
- FR-A- 2 791 007
- FR-A- 2 820 692
- US-B1- 6 318 793

## Description

L'invention concerne un toit escamotable pour véhicules comprenant plusieurs éléments de toit rigides déplaçables entre une position dans laquelle ils recouvrent l'habitacle du véhicule et une position dans laquelle ils sont rangés dans le coffre arrière du véhicule.

Un tel toit escamotable permet de transformer un véhicule du type berline ou coupé en un véhicule du type cabriolet.

On connaît particulièrement par le document FR-A-2 820 692 un toit escamotable pour véhicule, comprenant plusieurs éléments de toit rigides, déplaçables entre une position dans laquelle ils recouvrent l'habitacle du véhicule et une position dans laquelle ils sont rangés à l'intérieur du coffre arrière du véhicule, les éléments de toit étant, lorsqu'ils recouvrent l'habitacle, reliés les uns aux autres et aux parties avant et arrière de la carrosserie par des moyens de verrouillage commandés par une première tige entraînée en rotation par un moteur électrique, la première tige et le moteur étant logés dans un élément de toit.

Dans ce document, le moteur entraîne de façon positive les éléments de verrouillage aussi bien lors du déverrouillage que lors du verrouillage. Le moteur doit donc posséder une puissance relativement importante.

La présente invention vise à palier cet inconvénient.

A cet effet, l'invention a pour objet un toit escamotable pour véhicule, comprenant plusieurs éléments de toit rigides, déplaçables entre une position dans laquelle ils recouvrent l'habitacle du véhicule et une position dans laquelle ils sont rangés à l'intérieur du coffre arrière du véhicule, les éléments de toit étant, lorsqu'ils recouvrent l'habitacle, reliés les uns aux autres et aux parties avant et arrière de la carrosserie par des moyens de verrouillage commandés par une première tige entraînée en rotation par un moteur électrique, la première tige et le moteur étant logés dans un élément de toit, caractérisé par le fait que les moyens de verrouillage comprennent, pour au moins un élément de toit, un coulisseau monté dans une glissière solidaire dudit élément de toit, des premiers moyens élastiques aptes à repousser ledit coulisseau dans une position de déverrouillage, des moyens de poussée, commandés par la translation d'un écrou monté sur une partie filetée de ladite première tige, pour pousser ledit coulisseau dans une position de verrouillage contre l'action des premiers moyens élastiques, et au moins un doigt de verrouillage monté sur ledit coulisseau ou ladite glissière pour coopérer avec un organe de verrouillage complémentaire solidaire d'un élément de toit adjacent ou de la partie avant ou arrière de la carrosserie, lorsque le coulisseau est dans sa position de verrouillage.

Ainsi, le moteur sert uniquement à assurer le verrouillage, contre l'action des moyens élastiques. Le déverrouillage est réalisé par ces mêmes moyens élastiques.

Dans un mode de réalisation particulier de l'invention, ledit doigt de verrouillage est monté pivotant sur ladite glissière entre une position de verrouillage et une position de déverrouillage, des moyens élastiques étant agencés pour repousser le doigt de verrouillage dans sa position de déverrouillage, et des moyens de poussée solidaires du coulisseau étant agencés pour amener le doigt de verrouillage dans sa position de verrouillage lorsque le coulisseau est lui-même amené dans sa propre position de verrouillage.

Dans un autre mode de réalisation, ledit doigt de verrouillage est monté fixe sur ledit coulisseau.

Lorsque le toit comporte au moins trois éléments, le coulisseau d'un premier élément de toit peut être relié au coulisseau d'un deuxième élément de toit par au moins une tige de poussée.

On décrira maintenant, à titre d'exemple non limitatif, un mode de réalisation particulier de l'invention, en référence aux dessins schématiques annexés
dans lesquels :
- la figure 1 est une vue en perspective d'un système de verrouillage selon la présente invention ;
- la figure 2 est une vue en perspective à plus grande échelle d'un organe de la figure 1 ; et
- la figure 3 est une vue en perspective d'un autre mode de réalisation de l'organe de la figure 2.

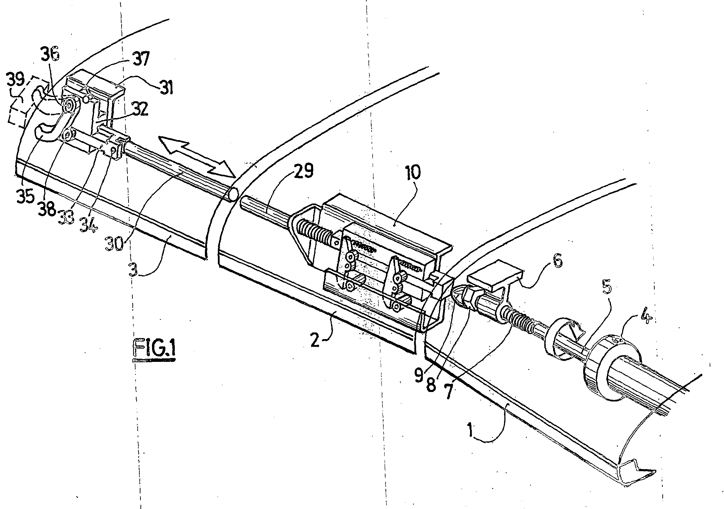

On voit à la figure 1 un toit rétractable de véhicule automobile. Ce toit comporte un élément arrière 1, un élément intermédiaire 2 et un élément avant 3. Ce toit est rétractable d'une position représentée où il recouvre l'habitacle du véhicule à une position où il est rangé dans le coffre arrière, le passage d'une position à l'autre s'effectuant par tout moyen connu.

Un moteur électrique 4 est logé dans l'élément arrière 1 et entraîne en rotation une tige 5 montée sur son arbre de sortie. La tige 5 est guidée par un palier 6 solidaire de l'élément arrière 1 et comprend à son extrémité un filetage 7. Ce filetage coopère avec un écrou 8 guidé en translation et solidaire d'un doigt de poussée 9.

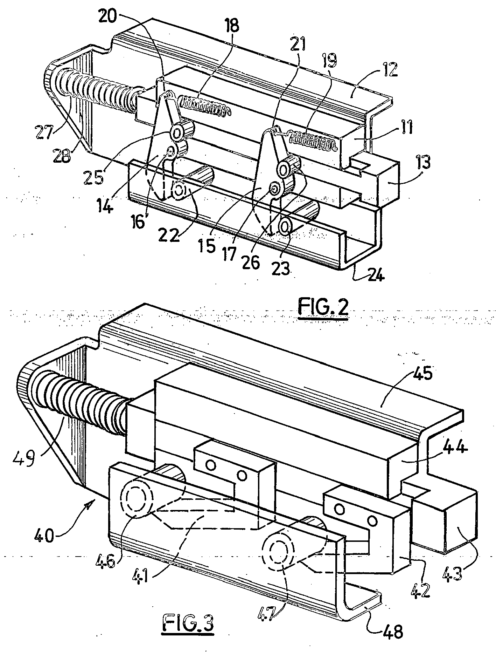

Une première unité de verrouillage 10 représenté plus en détail à la figure 2, est monté dans l'élément de toit intermédiaire 2.

L'unité 10 comprend une glissière 11 fixée dans l'élément 2 par une ferrure 12. Un coulisseau 13 de forme complémentaire à celle d'une rainure formée dans la glissière 11 est supporté par cette glissière de façon coulissante dans le sens longitudinal du véhicule.

Deux doigts de verrouillage 14 et 15 sont montés sur la glissière 11 par l'intermédiaire d'axes 16 et 17. Les doigts de verrouillage 14 et 15 se présentent sous la forme de leviers sensiblement verticaux dont la partie supérieure est sollicitée vers l'arrière par des ressorts 18 et 19 fixés à une de leurs extrémités à la glissière 11 et à leur autre extrémité à l'extrémité supérieure 20, 21 des doigts 14 et 15 respectivement.

Les parties inférieures des doigts 14 et 15 peuvent venir s'engager contre des organes de verrouillage 22, 23 respectivement, solidaires de l'élément de toit arrière. Les organes 22, 23 sont ici des tronçons tubulaires montés entre les ailes d'une cornière 24 fixée à l'avant de l'élément de toit arrière 1.

Des ergots de poussée 25, 26 sont montés sur le coulisseau 13 pour pousser la partie supérieure des doigts 14, 15 vers l'avant contre l'action des ressorts 18, 19 et amener ainsi les parties inférieures des doigts 14, 15 en contact de verrouillage avec les organes 22, 23 lorsque le coulisseau 13 est amené vers l'avant en position de verrouillage par le doigt de poussée 9.

Un ressort de compression 27 est monté entre l'extrémité avant du coulisseau 13 et une saillie 28 de la ferrure 12 pour repousser le coulisseau 13 vers l'arrière.

Une tige 29 traverse la saillie 28 et le ressort 27 de sorte que son extrémité arrière est en appui sur le coulisseau 13. Lorsque le toit est dans sa position de fermeture, l'extrémité avant de la tige 29 vient en vis-à-vis et sensiblement au contact de l'extrémité arrière d'une tige 30 montée dans l'élément de toit avant 3.

Cet élément 3 reçoit également par l'intermédiaire d'une ferrure 31 une glissière 32 dans laquelle est monté un coulisseau 33. La partie arrière du coulisseau 33 est fixée à l'aide d'un axe 34 à la partie avant de la tige 30.

Un doigt de verrouillage 35 est monté pivotant sur la glissière 32 autour d'un axe transversal 36. Le doigt de verrouillage 35 est rappelé vers l'arrière par un ressort 37 monté sur l'axe 36 et peut être poussé vers l'avant par un ergot de verrouillage 38 solidaire du coulisseau 33. Dans sa position avant (représentée en traits interrompus), le doigt de verrouillage 35 est engagé dans un organe de verrouillage 39 solidaire de la structure du véhicule.

Ainsi, lorsque la tige 5 est en entraînée en rotation par le moteur 4, le doigt de poussée 9 pousse la glissière 13 vers l'avant de sorte que les ergots de poussée 25 et 26 font basculer les doigts de verrouillage 14 et 15 qui viennent verrouiller l'élément de toit intermédiaire sur les organes 22 et 23 et par conséquent sur la structure du véhicule. Par ailleurs, le coulisseau 13 pousse les tiges 29 et 30 de sorte que l'ergot de poussée 38 amène le doigt de verrouillage 35 à verrouiller l'élément de toit avant 3.

Lorsque le moteur est entraîné dans l'autre sens, le doigt de poussée 9 se retire et les ressorts 27 et 37 ramènent les doigts de verrouillage en position de non verrouillage et libèrent par conséquent les éléments de toit intermédiaires 2 et avant 3.

Dans le mode de réalisation de la figure 3, l'unité de verrouillage 40 porte non pas des doigts de verrouillage pivotants comme les doigts 14 et 15 mais deux doigts fixes 41 et 42 en forme de crochets, montés sur le coulisseau 43 mobile dans une glissière 44, fixée à l'élément de toit par une ferrure 45. Les doigts 41 et 42 sont susceptibles de coopérer avec des organes de verrouillage 46 et 47 montés sur une cornière 48 solidaire de la structure du véhicule.

Lorsque le coulisseau 43 est poussé vers l'avant par le doigt de poussée 9 contre l'action d'un ressort 49, les doigts 41 et 42 s'engagent contre les organes de verrouillage 46 et 47 et verrouillent ainsi l'élément 2.

## Revendications

1. Toit escamotable pour véhicule, comprenant plusieurs éléments de toit rigides (1, 2, 3), déplaçables entre une position dans laquelle ils recouvrent l'habitacle du véhicule et une position dans laquelle ils sont rangés à l'intérieur du coffre arrière du véhicule, les éléments de toit étant, lorsqu'ils recouvrent l'habitacle, reliés les uns aux autres et aux parties avant et arrière de la carrosserie par des moyens de verrouillage commandés par une première tige (5) entraînée en rotation par un moteur électrique (4), la première tige et le moteur étant logés dans un élément de toit (1), **caractérisé par le fait que** les moyens de verrouillage comprennent, pour au moins un élément de toit (2, 3), un coulisseau (13, 33 ; 43) monté dans une glissière (11, 32 ; 44) solidaire dudit élément de toit, des premiers moyens élastiques (27, 37; 49) aptes à repousser ledit coulisseau dans une position de déverrouillage, des moyens de poussée (9), commandés par la translation d'un écrou (8) monté sur une partie filetée (7) de ladite première tige, pour pousser ledit coulisseau dans une position de verrouillage contre l'action des premiers moyens élastiques, et au moins un doigt de verrouillage (14, 15, 35 ; 41, 42) monté sur ledit coulisseau ou ladite glissière pour coopérer avec un organe de verrouillage complémentaire (22, 23, 39 ; 46, 47) solidaire d'un élément de toit adjacent ou de la partie avant ou arrière de la carrosserie, lorsque le coulisseau est dans sa position de verrouillage.

2. Toit escamotable selon la revendication 1, dans lequel ledit doigt de verrouillage (14, 15, 35) est monté pivotant sur ladite glissière (11, 32) entre une position de verrouillage et une position de déverrouillage, des moyens élastiques (18, 19, 37) étant agencés pour repousser le doigt de verrouillage dans sa position de déverrouillage, et des moyens de poussée (25, 26, 38) solidaires du coulisseau (13, 33) étant agencés pour amener le doigt de verrouillage dans sa position de verrouillage lorsque le coulisseau est lui-même amené dans sa propre position de verrouillage.

3. Toit escamotable selon la revendication 1, dans lequel ledit doigt de verrouillage (41, 42) est monté fixe sur ledit coulisseau (43).

4. Toit escamotable selon l'une quelconque des revendications 1 à 3, dans lequel le coulisseau (13) d'un premier élément de toit (2) est relié au coulisseau (33) d'un deuxième élément de toit (3) par au moins une tige de poussée (29, 30).

## Claims

1. A retractable roof for a vehicle including several rigid roof elements (1, 2, 3) which are movable between a position in which these elements cover the passenger compartment of the vehicle, and a position in which such elements are folded inside the rear trunk of the vehicle, the roof elements, when they cover the passenger compartment, being connected to each other and connected to the front and rear parts of the body through locking means controlled by a first rod (5) driven into rotation by an electric engine (4), the first rod and the engine being accommodated in a roof element (1), **characterized in that** the locking means include, for at least one roof element (2, 3), a sliding block (13, 33; 43) mounted in a slide (11, 32; 44) integral with said roof element, first elastic means (27, 37; 49) able to push said sliding block back to an unlocking position, pushing means (9), controlled by the translation of a nut (8) mounted on a threaded part (7) of said first rod, for pushing said sliding block into a locking position, against the action of the first elastic means, and at least a lock pin (14, 15, 35; 41, 42) mounted on said sliding block or said slide to cooperate with a complementary locking member (22, 23, 39; 46, 47) integral with an adjacent roof element or the front or rear part of the body, when the sliding block is in the locking position thereof.

2. A retractable roof according to claim 1, wherein said lock pin (14, 15, 35) is rotatingly mounted on said slide (11, 32) between a locking position and an unlocking position, with elastic means (18, 19, 37) being so arranged as to push the lock pin back to the unlocking position thereof, and pushing means (25, 26, 38) integral with the sliding block (13, 33) being so arranged as to bring the lock pin in the locking position thereof, when the sliding block is itself brought to its own locking position.

3. A retractable roof according to claim 1, wherein said lock pin (41, 42) is fixedly mounted on said sliding block (43).

4. A retractable roof according to any one of claims 1 to 3, wherein the sliding block (13) of a first roof element (2) is connected to the sliding block (33) of a second roof element (3) through at least one push rod (29, 30).

## Patentansprüche

1. Versenkbares Dach für ein Fahrzeug, das mehrere starre Dachelemente (1, 2, 3) umfaßt, die zwischen einer Position, in der sie den Fahrgastraum des Fahrzeugs überdecken und einer Position, in der sie im hinteren Kofferraum des Fahrzeugs untergebracht sind, verschiebbar sind, wobei die Dachelemente, wenn sie den Fahrgastraum überdecken, miteinander und mit dem vorderen und dem hinteren Teil der Karosserie mit Sperrmitteln verriegelt sind, die durch eine erste Stange (5) gesteuert werden, die von einem Elektromotor (4) in Drehung versetzt wird, wobei die erste Stange und der Motor in einem Dachelement (1) untergebracht sind, **dadurch gekennzeichnet, daß** die Sperrmittel für mindestens ein Dachelement (2, 3) einen Schieber (13, 33; 43) umfassen, der in eine Schiene (11, 32; 44) montiert ist, die fest mit dem besagten Dachelement verbunden ist, erste elastische Mittel (27, 37; 49), die geeignet sind, den besagten Schieber in eine Sperrposition zurückzudrücken, Schiebemittel (9), die von der Querbewegung einer Schraubenmutter (8) gesteuert werden, die auf einem Gewindeteil (7) der besagten ersten Stange montiert ist, um den besagten Schieber in eine Sperrposition gegen die Wirkung der ersten elastischen Mittel zu drücken, und mindestens einen Sperrzapfen (14, 15, 35; 41, 42), der auf dem besagten Schieber oder der besagten Schiene montiert ist, um mit einem ergänzenden Sperrorgan (22, 23, 39; 46, 47) zusammenzuwirken, das fest mit einem Dachelement verbunden ist, das entweder an den vorderen oder an den hinteren Teil der Karosserie angrenzt, wenn der Schieber in seiner Sperrposition ist.

2. Versenkbares Dach nach Anspruch 1, **dadurch gekennzeichnet, daß** der besagte Sperrzapfen (14, 15, 35) drehend auf der besagten Schiene (11, 32) zwischen einer Sperrposition und einer Freigabeposition montiert ist, wobei elastische Mittel (18, 19, 37) so gestaltet sind, daß sie den Sperrzapfen in seine Sperrposition zurückdrängen, und Schubmittel (25, 26, 38), die fest mit dem Schieber (13, 33) verbunden und so gestaltet sind, daß sie den Sperrzapfen in seine Sperrposition führen, wenn der Schieber selbst in seine eigene Sperrposition geführt wird.

3. Versenkbares Dach nach Anspruch 1, **dadurch gekennzeichnet, daß** der besagte Sperrzapfen (41, 42) fest auf dem besagten Schieber (43) montiert ist.

4. Versenkbares Dach nach einem beliebigen der vorstehenden Ansprüche 1 bis 3, **dadurch gekennzeichnet, daß** der Schieber (13) eines ersten Dachelements (2) mit dem Schieber (33) eines zweite Dachelements durch mindestens eine Schubstange (29, 30) verbunden ist.
